# EUROPÄISCHE PATENTSCHRIFT

(11) **EP 0 990 666 B1**
(45) Veröffentlichungstag und Bekanntmachung des Hinweises auf die Patenterteilung: **06.06.2001**
(21) Anmeldenummer: 99118070.4
(22) Anmeldetag: 23.09.1999
(51) Int. Cl.: C08F 220/30, C08F 220/18

(54) **Emulsionspolymerisierte Copolymerisate mit cyclischen oder polycyclischen Monomeren mit erhöhter Glasübergangstemperatur**
Emulsion polymerised copolymers with cyclic or polycyclic monomers with higher glass transition temperature
Copolymères préparés par polymérisation en émulsion de monomères cycliques ou polycycliques à température de transition vitreuse élevée

(30) Priorität: 24.09.1998 DE 19843926
(43) Veröffentlichungstag der Anmeldung: 05.04.2000
(73) Patentinhaber: Consortium für elektrochemische Industrie GmbH, 81379 München (DE)
(72) Erfinder: Schäfer, Oliver, Dr., 81377 München (DE); Stohrer, Jürgen, Dr., 82049 Pullach (DE); Plank, Ingrid, 81541 München (DE)
(74) Vertreter: Schuderer, Michael, Dr.

(56) Entgegenhaltungen:
- EP-A- 0 416 329
- EP-A- 0 419 657

## Beschreibung

Die Erfindung betrifft emulsionspolymerisierte Copolymerisate mit cyclischen oder polycyclischen Monomeren mit erhöhter Glasübergangstemperatur sowie Verfahren zu deren Herstellung und deren Verwendung.

Die Eigenschaften eines Homopolymeren sind durch das verwendete Monomer festgelegt. Durch das Beimischen weiterer Monomere vor oder während der Polymerisation entstehen Copolymere, deren Eigenschaften sich durch die Art und die Menge der verwendeten Comonomere variieren lassen. Hierbei kann man neben den chemischen Eigenschaften wie z. B. der Verseifungsstabilität und der Löslichkeit des Polymeren vor allen Dingen dessen physikalische Eigenschaften wie z. B. die für ein Polymer charakteristische Glastemperatur über einen weiten Bereich steuern. Die mechanischen Eigenschaften eines Polymeren ändern sich oberhalb der Glastemperatur signifikant. Das Polymer verliert seine Steifheit und beginnt zu fließen. Verschiedene Glastemperaturen von Homopolymerisaten sind z. B. in J. Brandrup, E.H. Immergut, Polymer Handbook 1st Ed., J. Wiley, New York, 1966 und 2nd Ed., J. Wiley, New York 1975 aufgeführt. Für Copolymerisate kann die Berechnung der Glastemperaturen näherungsweise auch nach der Beziehung von Fox erfolgen(T. G. Fox, Bull. Am Phys. Soc (Ser II)1, 123, [1956]).

Zur Erhöhung der Glastemperatur T(g) von Polymerisaten mit relativ niedriger T(g) wird daher so vorgegangen, daß Monomere copolymerisiert werden, deren Homopolymerisate eine höhere T(g) als die zu modifizierenden Polymerisate haben. Es ist bekannt, daß die Glastemperaturen von Vinylester-Polymerisaten, wie z. B. Vinylacetat-Polymeren (T(g) 32 °C) und Vinylacetat-Ethylen-Copolymeren (T(g) 0 °C bei ca. 15 % Ethylen-Anteil), oder die Glastemperatur von Acrylsäureester-Polymerisaten wie z. B. Butylacrylat-Polymeren (T(g) = -54 °C) durch Copolymerisation mit "harten" Monomeren, das heißt mit Monomeren, deren Homopolymere eine höhere T(g) als die zu modifizierenden Polymerisate haben, erhöhen werden kann. Im Stand der Technik für diesen Zweck etablierte Comonomere sind beispielsweise Methylmethacrylat (T(g) = 105 °C), Styrol (T(g) = 100 °C), Vinylchlorid (T(g) = 81 °C), oder auch Versaticsäure-Vinylester wie VeoVa9® (T(g) = 60 °C).

Die genannten Standardcomonomere zur Erhöhung der Glastemperatur weisen jedoch eine Reihe von Nachteilen auf. Bei Methylmethacrylat handelt es sich beispielsweise um ein Comonomer, welches mit Vinylestern nur schwer copolymerisierbar ist. Styrol als Comonomer führt dagegen in höheren Anteilen zu einer Verringerung der UV-Beständigkeit. Nachteilig bei der Verwendung von Vinylchlorid als Comonomer zur Erhöhung des T(g)-Wertes ist der Gehalt an Chlor. Die Vinylester von alpha-verzweigten Carbonsäuren mit 9 C-Atomen wie beispielsweise das VeoVa9® haben den Nachteil der Verseifungsanfälligkeit bei Anwendung ihrer Copolymerisate im alkalischen Medium.

Es bestand daher die Aufgabe, emulsionspolymerisierbare Copolymere zu entwickeln, welche zum einen preiswert, technisch leicht herstellbar, toxikologisch unbedenklich und zum anderen schwer verseifbar sind. Dabei sollte mindestens ein Comonomer eine so hohe Glastemperatur aufweisen, daß auch mit geringen Mengen eine deutliche Erhöhung des T(g)-Werts in einem Copolymerisat erhalten wird, es aber gleichzeitig in Emulsion radikalisch polymerisierbar ist. Gesucht wurden daher geeignete Comonomere, welche aus preisgünstigen Edukten technisch einfach herstellbar sind, als Homopolymer eine hohe Glastemperatur besitzen, mit ethylenisch ungesättigten Verbindungen emulsionspolymerisierbar sind und gleichzeitig zu hydrophoben Eigenschaften im Polymer führen.

Erstaunlicherweise wurde nun gefunden, daß Verbindungen, die eine mindestens bicyclische Gruppe und gleichzeitig eine radikalisch polymerisierbare Gruppe enthalten alle oben erwähnten Vorzüge in sich vereinen.

Gegenstand der Erfindung sind emulsionspolymerisierte Copolymerisate bei denen ein oder mehrere ethylenisch ungesättigte Monomere copolymerisiert werden, dadurch gekennzeichnet das sie 0.5 bis 60 Gew.-% an einer oder mehreren Comonomereinheiten der allgemeinen Formel (II) enthalten, 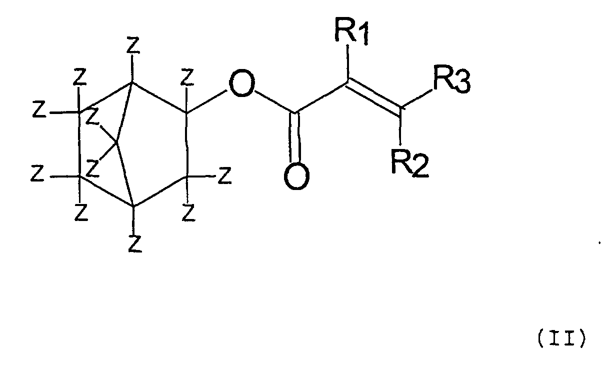 wobei R₁, R₂ und R₃ gleich oder verschieden sind und die Bedeutung H oder C₁- bis C₄-Alkylrest haben und Z gleich oder verschieden sein kann und die Bedeutung H, R, OR, COOR, COR hat, wobei R einen verzweigten oder unverzweigten C₁- bis C₁₀-Alkylrest-oder Cycloalkylrest oder C₁- bis C₈-Arylrest darstellt und pro Cyclus im Schnitt maximal ein Alkylsubstituent enthalten ist.

Bevorzugt hat in der allgemeinen Formel (II) R₁ die Bedeutung H oder C₁- bis C₄-Alkylrest und R₂ und R₃ die Bedeutung H. Z ist dabei gleich oder verschieden und kann entweder die Bedeutung H, Methyl oder Phenyl haben und pro Cyclus ist im Schnitt maximal ein Alkylsubstituent enthalten.

Bevorzugte Verbindungen der Formel (II) sind Norbornylacrylat, Methylnorbornylacrylat, Dimethylnorbornylacrylat, Norbornylmethacrylat, Methylnorbornylmethacrylat und Dimethylnorbornylmethacrylat.

Ein weiterer Gegenstand der Erfindung sind emulsionspolymerisierte Copolymerisate bei denen ein oder mehrere ethylenisch ungesättigte Monomere copolymerisiert werden, dadurch gekennzeichnet das sie 0.5 bis 60 Gew.-% an einer oder mehreren Comonomereinheiten der allgemeinen Formel (III) oder (IV) enthalten, 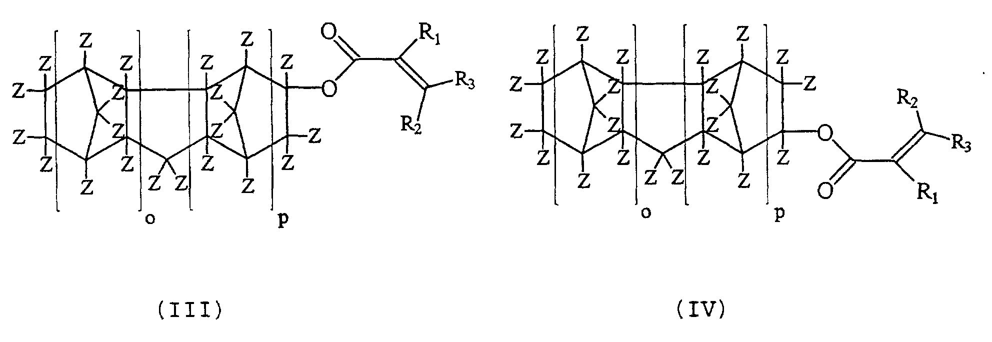 wobei R₁, R₂ und R₃ gleich oder verschieden sind und die Bedeutung H oder C₁- bis C₄-Alkylrest haben und Z gleich oder verschieden sein kann und die Bedeutung H, R, OR, COOR, COR hat, wobei R einen verzweigten oder unverzweigten C₁- bis C₁₀-Alkylrest oder Cycloalkylrest, oder C₁ bis C₈-Arylrest darstellt, wobei pro Cyclus im Durchschnitt maximal ein Kohlenwasserstoffsubstituent enthalten ist. o und p stehen unabhängig voneinander für eine ganze Zahl zwischen 0 und 6, wobei die Summe aus o und p 1 bis 6 sein muß.

Der Rest R hat vorzugsweise die Bedeutung H oder Methylrest. Die Reste Z sind vorzugsweise gleich oder verschieden mit der Bedeutung H oder C₁- bis C₁₀-Alkylrest, Cycloalkylrest oder Phenylrest.
Besonders bevorzugt hat R die Bedeutung H und die Reste Z sind gleich oder verschieden mit der Bedeutung H, Methylrest oder Phenylrest.

Bevorzugt hat in den allgemeinen Formeln (III) und (IV) R₁ die Bedeutung H oder C₁- bis C₄-Alkylrest und R₂ und R₃ die Bedeutung H. Z ist gleich oder verschieden und hat entweder die Bedeutung H oder Methyl, und o und p steht unabhängig voneinander für eine ganze Zahl zwischen 0 und 6 stehen, wobei die Summe von o und p größer oder gleich 1 und kleiner als 6 ist.

Bevorzugte Verbindungen der Formel (III) und (IV) sind
Tricyclo[5.2.1.0^{2.6}]decylacrylat,
Tricyclo[5.2.1.0^{2.6}]decylmethacrylat,
Dimethyltricyclo[5.2.1.0^{2.6}]decylacrylat,
Dimethyltricyclo[4.3.1.0^{2.6}]decylmethacrylat,
Pentacyclo[6.5.1.1.^{3.6}0.^{2.7}0^{9.13}]pentadecylacrylat,
Pentacyclo[6.5.1.1.^{3.6}0.^{2.7}0^{9.13}]pentadecylmethacrylat,
Trimethylpentacyclo[6.5.1.1.^{3.6}0.^{2.7}0^{9.13}]pentadecylacrylat,
Trimethylpentacyclo[6.5.1.1.^{3.6}0.^{2.7}0^{9.13}]pentadecylmethacrylat,
Heptacyclo[8.7.1^{2.9}.1^{4.7}.1^{11.17}.0.0^{3.8}.0^{12.15}]eicosylacrylat,
Heptacyclo[8.7.1^{2.9}.1^{4.7}.1^{11.17}.0.0^{3.8}0^{12.16}]eicosylmethacrylat,
Tetramethylheptacyclo[8.7.1^{2.9}.1^{4.7}.1^{11.17}.0.0^{3.8}.0^{12.16}]eicosylacrylat und
Tetramethylheptacyclo[8.7.1^{2.9}.1^{4.7}.1^{11.17}.0.0^{3.8}.0^{12.16}]eicosylmethacrylat.

Die Herstellung der cyclischen bzw. polycyclischen Comonomere ist bekannt. Aus WO-A 81/00846, US-A 3553294, JP-A 08134015(Derwent Abstract AN-96-306507), JP-A 63008355 (Derwent Abstract AN-88-052816) und JP-A 03148239 (Derwent Abstract AN-91-227880) ist bekannt, daß diese Verbindungen z.B. durch einfache säurekatalysierte Umsetzung von Acrylsäure oder Methacrylsäure mit einfach ungesättigten Kohlenwasserstoffen erhalten werden, welche einen mindestens bicyclischen Baustein enthalten, wie z.B. Norbornen, Methylnorbornen, Phenylnorbornen, Dimethylnorbornen, Dihydrodicyclopentadien, Dimethyldihydrodicyclopentadien, Tetracyclododecen, Methyltetracyclododecen, Dimethyltetracyclododecen, Ethyltetracyclododecen, Phenyltetracyclododecen, Hexacycloheptadecen.

Die Darstellung der ungesättigten Bicyclen ist aus JP-A 06072909(Derwent Abstract AN-94-124095), EP-A 0758657, US-A 5569730, JP-A 06009437 (Derwent Abstract AN-94-053926), JP-A 03128333 (Derwent Abstract AN-91-203976), DD-A 208341(Derwent Abstract AN-84-213689) bekannt.

Die Copolymere enthalten ferner mindestens eine ethylenisch ungesättigte Verbindung aus der Gruppe der Acrylsäureester oder Methacrylsäureester von Alkoholen mit 1 bis 12 C-Atomen, Vinylester von gesättigten aliphatischen Carbonsäuren mit 2 bis 15 C-Atomen, ethylenisch ungesättigte Dicarbonsäuren sowie deren Anhydride, Mono- oder Diester, Säuren, Olefine, Vinylaromaten, Vinylhalogenide und/oder Vinylether, sowie Tiglinsäureester und Crotonsäureester von Alkoholen mit 1 bis 12 C-Atomen.

Unter den ethylenisch ungesättigten Verbindungen besonders bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit bis zu 12 C-Atomen, beispielsweise VeoVa9® oder VeoVa10® . Besonders bevorzugt ist dabei Vinylacetat.

Unter den ethylenisch ungesättigten Verbindungen bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat. Ganz besonders bevorzugt sind Methylacrylat, Methylmethacrylat, n-Butylacrylat und 2-Ethylhexylacrylat.

Bevorzugtes Anhydrid ethylenisch ungesättigter Verbindungen ist Maleinsäureanhydrid. Unter den ethylenisch ungesättigten Verbindungen bevorzugte Estergruppen der Fumarsäure und der Maleinsäure sind die Methyl-, Ethyl-, n-Propyl-, iso-Propyl-, n-Butyl-, iso-Butyl-, t-Butyl-, Hexyl-, Ethylhexyl-, und Dodecyl-Gruppe.

Bevorzugte Olefine sind Ethen, Propen oder Diene wie beispielsweise Butadien oder Isopren. Bevorzugte Vinylaromaten sind Styrol, Methylstyrol, Vinyltoluol. Eine bevorzugte Vinylhalogenverbindung ist Vinylchlorid und ein bevorzugter Vinylether ist beispielsweise Methylvinylether.

In einer bevorzugten Ausführungsform enthalten die emulsionspolymerisierten Copolymerisate zusätzlich noch 0.05 bis 20.0 Gew%, bezogen auf das Gesamtgewicht des Comonomergemisches, Hilfsmonomere aus der Gruppe der ethylenisch ungesättigten Carbonsäuren, vorzugsweise Acrylsäure oder Methacrylsäure; aus der Gruppe der ethylenisch ungesättigten Carbonsäureamide, vorzugsweise Acrylamid; aus der Gruppe der ethylenisch ungesättigten Sulfonsäuren bzw. deren Salze, vorzugsweise Vinylsulfonsäure; und/oder Verbindungen aus der Gruppe der mehrfach ethylenisch ungesättigten Comonomeren, beispielsweise Divinyladipat, Diallylmaleat, Allylmethacrylat oder Triallylcyanurat. Als Hilfsmonomere geeignet sind auch vernetzend wirkende Comonomere, beispielsweise Acrylamidoglykolsäure (AGA), Methylacrylamidoglykolsäuremethylester (MAGME), N-Methylolacrylamid (NMAA), N-Methylolmethacrylamid, N-Methylolallylcarbamat, Alkyl-Ether oder Alkyl-Ester des N-Methylolacrylamids, des N-Methylolmethacrylamids oder des N-Methylolallylcarbamats.

Die Herstellung der genannten Copolymere erfolgt vorzugsweise nach dem Emulsionspolymerisations-Verfahren. Die Polymerisation kann dabei diskontinuierlich oder kontinuierlich, mit oder ohne Verwendung von Saatlatices, unter Vorlage aller oder einzelner Bestandteile des Reaktionsgemisches, unter teilweiser Vorlage und Nachdosierung der oder einzelner Bestandteile des Reaktionsgemisches oder nach dem Dosierverfahren ohne Vorlage durchgeführt werden. Alle Dosierungen erfolgen vorzugsweise im Maße des Verbrauchs der jeweiligen Komponente. Die Polymerisation wird vorzugsweise in einem Temperaturbereich von 0 bis 100°C durchgeführt und mit den für die Emulsionspolymerisation üblicherweise eingesetzten Methoden eingeleitet. Die Initiierung erfolgt mittels der üblichen wasserlöslichen Radikalbildner, die vorzugsweise in Mengen von 0.01 bis 3.0 Gew%, bezogen auf das Gesamtgewicht der Monomeren, eingesetzt werden. Als Dispergiermittel können alle üblicherweise bei der Emulsionspolymerisation verwendeten Emulgatoren und/oder Schutzkolloide eingesetzt werden.

Gegebenenfalls werden 0.1 bis 6 Gew%, bezogen auf das Gesamtgewicht der Monomeren, an Emulgator eingesetzt. Als Emulgatoren kommen hierbei sowohl anionische, kationische als auch nichtionische Emulgatoren in Betracht.

Vorzugsweise werden Schutzkolloide, besonders bevorzugt in Mengen von 0.5 bis 15 Gew%, bezogen auf das Gesamtgewicht der Monomeren, eingesetzt. Beispiele hierfür sind Polyvinylalkohole und deren Derivate wie Vinylalkohol/Vinylacetat-Copolymere, Polyvinylpyrrolidone; Polysaccharide in wasserlöslicher Form wie Stärken, Cellulose, Dextran und deren Carboxymethyl-, Methyl-, Hydroxyethyl-, Hydroxypropyl-Derivate; Proteine wie Casein; synthetische Polymere wie Poly(meth)acrylsäure, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

In der am meisten bevorzugten Ausführungsform wird die Polymerisation mit Schutzkolloid und ohne Zugabe von Emulgator durchgeführt.

Die durch Emulsionspolymerisation erhaltenen Dispersionen können auch nach bekannten Verfahren in Dispersionspulver überführt werden, beispielsweise mittels Sprühtrocknung. Die Trocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 70°C bis 90°C, je nach Anlage, T(g) des Copolymeren und gewünschtem Trocknungsgrad, gewählt.

Die so erhältlichen wäßrigen Dispersionen oder in Wasser redispergierbaren Dispersionspulver können in den typischen Anwendungsbereichen eingesetzt werden. Beispielsweise in bauchemischen Produkten in Verbindung mit anorganischen, hydraulisch abbindenden Bindemitteln wie Zementen (z. B. Portland-, Aluminat-, Trass-, Hüllen-, Magnesia- oder Phosphatzement), Gips, Wasserglas, für die Herstellung von Bauklebern, Putzen, Spachtelmassen, Fußbodenspachtelmassen, Fugenmörtel und Farben und Lacken, ferner als Alleinbindemittel für Beschichtungsmittel und Klebemittel oder als Bindemittel für Textilien. Vorzugsweise werden die Copolymere als hydrophobierendes Bindemittel eingesetzt.

Die nachfolgenden Beispiele dienen zur weiteren Erläuterung der Erfindung:

### Beispiel 1

### Emulsionspolymerisation von Vinylacetat mit 2.5 Gew.-% Norbornylacrylat

Ein 1 Liter 3-Hals-Kolben, ausgerüstet mit Rückflußkühler, mechanischem Rührwerk, Stickstoffeinleitungsrohr und Thermometer, wurde mit 195 g durch Destillation gereinigtem Vinylacetat, 5 g Norbornylacrylat, 400 g H₂O, 10 g Aerosol, 0.5 g Dibenzoylperoxid, 1.4 g Ammoniumferrosulfat-hexahydrat und 6g Natriumpyrophosphat-decahydrat beschickt. Das Reaktionsgemisch wurde auf 40 °C erwärmt und dabei unter einer Stickstoffdecke gehalten. Nach 2 Stunden wurde das Polymerisat gefällt und im Trockenschrank von restlichem Lösungsmittel befreit. Der Anteil an einpolymerisiertem Acrylat betrug 4 Gew.-% laut NMR. Der mittels DSC Analytik bestimmte Glaspunkt betrug 34 °C.

### Beispiel 2

### Emulsionspolymerisation von Vinylacetat mit 10 Gew.-% Norbornylacrylat

Ein 1 Liter 3-Hals-Kolben, ausgerüstet mit Rückflußkühler, mechanischem Rührwerk, Stickstoffeinleitungsrohr und Thermometer, wurde mit 180 g durch Destillation gereinigtem Vinylacetat, 20 g Norbornylacrylat, 400 g H₂O, 10 g Aerosol, 0.5 g Dibenzoylperoxid, 1.4 g Ammoniumferrosulfat-hexahydrat und 6g Natriumpyrophosphat-decahydrat beschickt. Das Reaktionsgemisch wurde auf 40 °C erwärmt und dabei unter einer Stickstoffdecke gehalten. Nach 2 Stunden wurde das Polymerisat gefällt und im Trockenschrank von restlichem Lösungsmittel befreit. Der Anteil an einpolymerisiertem Acrylat betrug 27 Gew.-% laut NMR. Der mittels DSC Analytik bestimmte Glaspunkt betrug 45 °C.

### Beispiel 3

### Emulsionspolymerisation von Vinylacetat mit 20 Gew.-% Norbornylacrylat

Ein 1 Liter 3-Hals-Kolben, ausgerüstet mit Rückflußkühler, mechanischem Rührwerk, Stickstoffeinleitungsrohr und Thermometer, wurde mit 160 g durch Destillation gereinigtem Vinylacetat, 40 g Norbornylacrylat, 400 g H₂O, 10 g Aerosol, 0.5 g Dibenzoylperoxid, 1.4 g Ammoniumferrosulfat-hexahydrat und 6g Natriumpyrophosphat-decahydrat beschickt. Das Reaktionsgemisch wurde auf 40 °C erwärmt und dabei unter einer Stickstoffdecke gehalten. Nach 2 Stunden wurde das Polymerisat gefällt und im Trockenschrank von restlichem Lösungsmittel befreit. Der Anteil an einpolymerisiertem Acrylat betrug 60 Gew.-% laut NMR. Der mittels DSC Analytik bestimmte Glaspunkt betrug 55 °C.

### Beispiel 4

### Emulsionspolymerisation von Vinylacetat mit 5 Gew.-% Tetracyclo[4.4.0.1.^{2, 5}.1^{7, 10}]-dodecyl-3-acrylat

Die Polymerisation wurde in einem typischen Redoxsystem ausgeführt. Ein Reaktionsgefäß, ausgerüstet mit Rückflußkühler, mechanischem Rührwerk, Stickstoffeinleitungsrohr und Thermometer, wurde mit 190 g durch Destillation gereinigtem Vinylacetat, 10 g Tetracyclo[4.4.0.1.^{2, 5}.1^{7, 10}]-dodecyl-3-acrylat, 400g H₂O, 10 g Aerosol, 0.5 g Dibenzoylperoxid, 1.4 g Ammoniumferrosulfat-hexahydrat und 6 g Natriumpyrophosphat-decahydrat beschickt. Das Reaktionsgemisch wurde auf 40 °C erwärmt und dabei unter einer Stickstoffdecke gehalten. Nach 2 Stunden wurde das Polymerisat gefällt und im Trockenschrank von restlichem Lösungsmittel befreit. Der Anteil an einpolymerisiertem Acrylat betrug 30 Gew.-% laut NMR. Der mittels DSC Analytik bestimmte Glaspunkt betrug 54 °C.

### Beispiel 5

### Emulsionspolymerisation von Butylacrylat mit 10 Gew.-% Norbornylmethacrylat

Ein 1 Liter 3-Hals-Kolben, ausgerüstet mit Rückflußkühler, mechanischem Rührwerk, Stickstoffeinleitungsrohr und Thermometer, wurde mit 180 g durch Destillation gereinigtem Butylacrylat, 20 g Norbornylmethacrylat, 400 g H₂O, 10 g Aerosol, 0.5 g Dibenzoylperoxid, 1.4 g Ammoniumferrosulfat-hexahydrat und 6g Natriumpyrophosphat-decahydrat beschickt. Das Reaktionsgemisch wurde auf 40 °C erwärmt und dabei unter einer Stickstoffdecke gehalten. Nach 2 Stunden wurde das Polymerisat gefällt und im Trockenschrank von restlichem Lösungsmittel befreit. Der Anteil an einpolymerisiertem Acrylat betrug 27 Gew.-% laut NMR. Der mittels DSC Analytik bestimmte Glaspunkt betrug -25 °C.

### Beispiel 6

### Emulsionspolymerisation von Butylacrylat mit 10 Gew.-% Tetracyclo[4.4.0.1.^{2, 5}.1^{7, 10}]-dodecyl-3-methacrylat

Ein 1 Liter 3-Hals-Kolben, ausgerüstet mit Rückflußkühler, mechanischem Rührwerk, Stickstoffeinleitungsrohr und Thermometer, wurde mit 180 g durch Destillation gereinigtem Butylacrylat, 20 g Tetracyclo [4.4.0.1.^{2, 5}.1^{7, 10}]-dodecyl-3-methacrylat, 400 g H₂O, 10 g Aerosol, 0.5 g Dibenzoylperoxid, 1.4 g Ammoniumferrosulfat-hexahydrat und 6g Natriumpyrophosphat-decahydrat beschickt. Das Reaktionsgemisch wurde auf 40 °C erwärmt und dabei unter einer Stickstoffdecke gehalten. Nach 2 Stunden wurde das Polymerisat gefällt und im Trockenschrank von restlichem Lösungsmittel befreit. Der Anteil an einpolymerisiertem Acrylat betrug 36 Gew.-% laut NMR. Der mittels DSC Analytik bestimmte Glaspunkt betrug -10 °C.

### Beispiel 7

### Emulsionspolymerisation von Vinylacetat mit 10 Gew.-% Tricyclo[5.2.1.0^{2.6}]decylacrylat

Ein 1 Liter 3-Hals-Kolben, ausgerüstet mit Rückflußkühler, mechanischem Rührwerk, Stickstoffeinleitungsrohr und Thermometer, wurde mit 180 g durch Destillation gereinigtem Vinylacetat, 20 g Tricyclo[5.2.1.0^{2.6}]decylacrylat, 400 g H₂O, 10 g Aerosol, 0.5 g Dibenzoylperoxid, 1.4 g Ammoniumferrosulfat-hexahydrat und 6g Natriumpyrophosphat-decahydrat beschickt. Das Reaktionsgemisch wurde auf 40 °C erwärmt und dabei unter einer Stickstoffdecke gehalten. Nach 2 Stunden wurde das Polymerisat gefällt und im Trockenschrank von restlichem Lösungsmittel befreit. Der Anteil an einpolymerisiertem Acrylat betrug 32 Gew.-% laut NMR. Der mittels DSC Analytik bestimmte Glaspunkt betrug 45 °C.

## Patentansprüche

1. Emulsionspolymerisierte Copolymerisate bei denen ein oder mehrere ethylenisch ungesättigte Monomere copolymerisiert werden, dadurch gekennzeichnet, dass sie 0,5 bis 60 Gew.-% an einer oder mehreren Comonomereinheiten der allgemeinen Formel (II) enthalten, 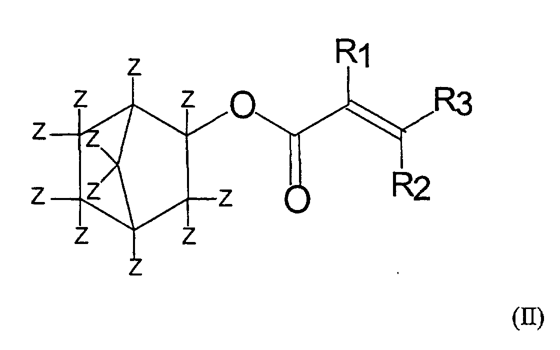 wobei R₁, R₂ und R₃ gleich oder verschieden sind und die Bedeutung H oder C₁- bis C₄-Alkylrest haben und Z gleich oder verschieden sein kann und die Bedeutung H, R, OR, COOR, COR hat, wobei R einen verzweigten oder unverzweigten C₁- bis C₁₀-Alkylrest, oder Cycloalkylrest, oder C₁- bis C₈-Arylrest darstellt und pro Cyclus im Schnitt maximal ein Alkylsubstituent enthalten ist.

2. Copolymere nach Anspruch 1, dadurch gekennzeichnet, dass in der allgemeinen Formel (II) R₁ die Bedeutung H oder C₁- bis C₄-Alkylrest hat und R₂ und R₃ die Bedeutung H haben, Z gleich oder verschieden sein kann und entweder die Bedeutung H, Methyl oder Phenyl hat und pro Cyclus im Schnitt maximal ein Alkylsubstituent enthalten ist.

3. Copolymere nach Anspruch 1 bis 2, dadurch gekennzeichnet, dass die allgemeine Formel (II) die Bedeutung Norbornylacrylat, Methylnorbornylacrylat, Dimethylnorbornylacrylat, Norbornylmethacrylat, Methylnorbornylmethacrylat, Dimethylnorbornylmethacrylat hat.

4. Emulsionspolymerisierte Copolymerisate bei denen ein oder mehrere ethylenisch ungesättigte Monomere copolymerisiert werden, dadurch gekennzeichnet, dass sie 0,5 bis 60 Gew.-% an einer oder mehreren Comonomereinheiten der allgemeinen Formel III oder IV enthalten, 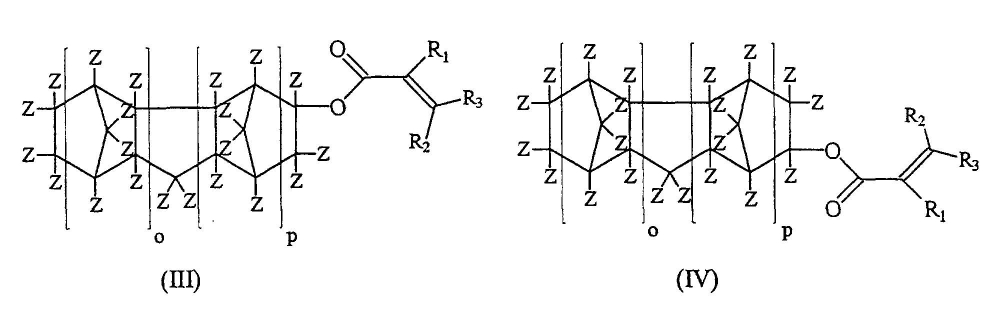 wobei R₁, R₂ und R₃ gleich oder verschieden sind und die Bedeutung H oder C₁- bis C₄-Alkylrest haben und Z gleich oder verschieden sein kann und die Bedeutung H, R, OR, COOR, COR hat, wobei R einen verzweigten oder unverzweigten C₁- bis C₁₀-Alkylrest, oder Cycloalkylrest, oder C₁- bis C₈-Arylrest und o und p unabhängig voneinander für eine ganze Zahl zwischen 0 und 6 stehen, wobei die Summe von o und p größer oder gleich 1 und kleiner als 6 ist.

5. Copolymere nach Anspruch 4, dadurch gekennzeichnet, daß R₁ die Bedeutung H oder C₁- bis C₄-Alkylrest hat und R₂ und R₃ die Bedeutung H haben, Z gleich oder verschieden sein kann und entweder die Bedeutung H oder Methyl hat, und o und p unabhängig voneinander für eine ganze Zahl zwischen 0 und 6 stehen, wobei die Summe von o und p größer oder gleich 1 und kleiner als 6 ist.

6. Copolymere nach Anspruch 4 bis 5 , dadurch gekennzeichnet, dass die allgemeinen Formeln (III) und (IV) die Bedeutung
Tricyclo[5.2.1.0^{2.6}]decylacrylat,
Tricyclo[5.2.1.0^{2.6}]decylmethacrylat,
Dimethyltricyclo[5.2.1.0^{2.6}]decylacrylat,
Dimethyltricyclo[4.3.1.0^{2.6}]decylmethacrylat,
Pentacyclo[6.5.1.1.^{3.6}0.^{2.7}0^{9.13}]pentadecylacrylat,
Pentacyclo[6.5.1.1.^{3.6}0.^{2.7}0^{9.13}]pentadecylmethacrylat,
Trimethylpentacyclo[6.5.1.1.^{3.6}0.^{2.7}0^{9.13}]pentadecylacrylat,
Trimethylpentacyclo[6.5.1.1.^{3.5}0.^{2.7}0^{9.13}]pentadecylmethacrylat,
Heptacyclo[8.7.1^{2.9}.1^{4.7}.1^{11.17}.0.0^{3.8}.0^{12.16}]eicosylacrylat,
Heptacyclo[8.7.1^{2.9}.1^{4.7}.1^{11.17}.0.0^{3.8}.0^{12.16}]eicosylmethacrylat,
Tetramethylheptacyclo[8.7.1^{2.9}.1^{4.7}.1^{11.17}.0.0^{3.8}.0^{12.16}]eicosylacrylat oder
Tetramethylheptacyclo[8.7.1^{2.9}.1^{4.7}.1^{11.17}.0.0^{3.8}.0^{12.16}]eicosylmethacrylat haben.

7. Verwendung von Copolymeren nach Anspruch 1 bis 6 als Bindemittel in Bauklebern, Putzen, Spachtelmassen, Fußbodenspachtelmassen, Fugenmörtel.

8. Verwendung von Copolymeren nach Anspruch 1 bis 6 in Farben und Lacken.

9. Verwendung von Copolymeren nach Anspruch 1 bis 6 als Alleinbindemittel in Beschichtungmitteln und Klebemittel.

10. Verwendung von Copolymeren nach Anspruch 1 bis 6 als Bindemittel für Textilien.

## Claims

1. Emulsion-polymerized copolymers in which one or more ethylenically unsaturated monomers are copolymerized, characterized in that they contain from 0.5 to 60% by weight of one or more comonomer units of the general formula (II) 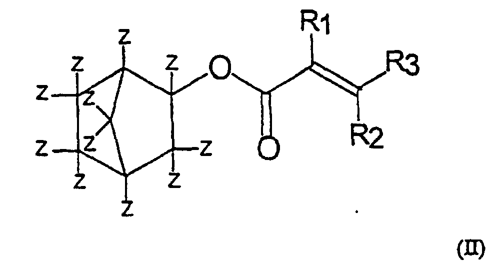 in which R₁, R₂ and R₃ are identical or different and have the meaning H or C₁- to C₄-alkyl radical and Z may be identical or different and has the meaning H, R, OR, COOR or COR, in which R represents a branched or straight-chain C₁- to C₁₀-alkyl radical or cycloalkyl radical or a C₁- to C₈-aryl radical and on average not more than one alkyl substituent is present per cycle.

2. Copolymers according to Claim 1, characterized in that, in the general formula (II), R₁ has the meaning H or C₁- to C₄-alkyl radical and R₂ and R₃ have the meaning H, Z may be identical or different and either has the meaning H, methyl or phenyl and on average not more than one alkyl substituent is present per cycle.

3. Copolymers according to Claim 1 or 2, characterized in that the general formula (II) has the meaning norbornyl acrylate, methylnorbornyl acrylate, dimethylnorbornyl acrylate, norbornyl methacrylate, methylnorbornyl methacrylate or dimethylnorbornyl methacrylate.

4. Emulsion-polymerized copolymers in which one or more ethylenically unsaturated monomers are copolymerized, characterized in that they contain from 0.5 to 60% by weight of one or more comonomer units of the general formula III or IV 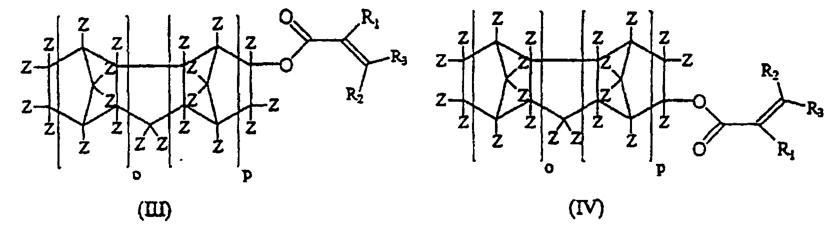 in which R₁, R₂ and R₃ are identical or different and have the meaning H or C₁- to C₄-alkyl radical and Z may be identical or different and has the meaning H, R, OR, COOR or COR, in which R represents a branched or straight-chain C₁- to C₁₀-alkyl radical or cycloalkyl radical or a C₁- to C₈-aryl radical and o and p, independently of one another, represent an integer between 0 and 6, the sum of o and p being greater than or equal to 1 and less than 6.

5. Copolymers according to Claim 4, characterized in that R₁ has the meaning H or C₁- to C₄-alkyl radical and R₂ and R₃ have the meaning H, Z may be identical or different and has either the meaning H or methyl, and o and p, independently of one another, represent an integer between 0 and 6, the sum of o and p being greater than or equal to 1 and less than 6.

6. Copolymers according to Claim 4 or 5, characterized in that the general formulae (III) and (IV) have the meaning
tricyclo[5.2.1.0^{2.6}]decyl acrylate,
tricyclo[5.2.1.0^{2.6}]decyl methacrylate,
dimethyltricyclo[5.2.1.0^{2.6}]decyl acrylate,
dimethyltricyclo[4.3.1.0^{2.6}]decyl methacrylate,
pentacyclo[6.5.1.1^{3.6}.0^{2.7}.0^{9.13}]pentadecyl acrylate,
pentacyclo[6.5.1.1^{3.6.}0^{2.7}.0^{9.13}]pentadecyl methacrylate,
trimethylpentacyclo[6.5.1.1^{3.6}.0^{2.7}.0^{9.13}]pentadecyl acrylate,
trimethylpentacyclo[6.5.1.1^{3.6}.0^{2.7}.0^{9.13}]pentadecyl methacrylate,
heptacyclo[8.7.1^{2.9}.1^{4.7}.1^{11.17}.0.0^{3.8}.0^{12.16}]eicosyl acrylate,
heptacyclo[8.7.1^{2.9}.1^{4.7}.1^{11.17}.0.0^{3.8}.0^{12.16}]eicosyl methacrylate,
tetramethylheptacyclo[8.7.1^{2.9}.1^{4.7}.1^{11.17}.0.0^{3.8}.0^{12.16}]eicosyl acrylate or
tetramethylheptacyclo[8.7.1^{2.9}.1^{4.7}.1^{11.17}.0.0^{3.8}.0^{12.16}]eicosyl methacrylate.

7. Use of copolymers according to Claims 1 to 6 as binders in construction adhesives, renders, filling compounds, floor filling compounds and joint mortars.

8. Use of copolymers according to Claims 1 to 6 in paints and finishes.

9. Use of copolymers according to Claims 1 to 6 as sole binders in coating compositions and adhesives.

10. Use of copolymers according to Claims 1 to 6 as binders for textiles.

## Revendications

1. Copolymères polymérisés en émulsion dans lesquels un ou plusieurs monomères éthyléniquement insaturés sont copolymérisés, caractérisés en ce qu'ils renferment de 0,5 à 60% en poids d'un ou de plusieurs motifs comonomères de formule générale (II), 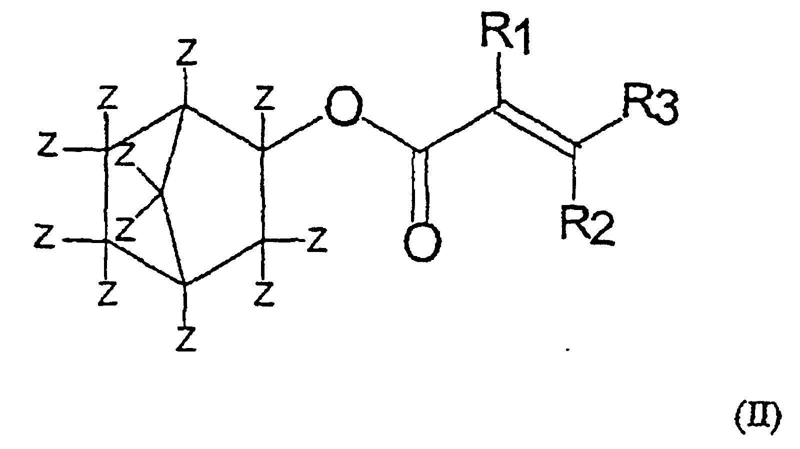 dans laquelle R₁, R₂ et R₃ sont identiques ou différents et représentent H ou un radical alkyle en C₁ à C₄ et Z peut être identique ou différent et représente H, R, OR, COOR, COR, où R représente un radical alkyle ramifié ou non ramifié en C₁ à C₁₀, ou un radical cycloalkyle, ou un radical aryle en C₁ à C₈, et au plus un substituant alkyle est en moyenne présent par cycle.

2. Copolymères selon la revendication 1, caractérisés en ce que dans la formule générale (II), R₁ représente H ou un radical alkyle en C₁ à C₄, et R₂ et R₃ représentent H, Z peut être identique ou différent et représente H, un méthyle ou un phényle, et au plus un substituant alkyle est en moyenne présent par cycle.

3. Copolymères selon les revendications 1 à 2, caractérisés en ce que la formule générale (II) représente l'acrylate de norbornyle, l'acrylate de méthylnorbornyle, l'acrylate de diméthylnorbornyle, le méthacrylate de norbornyle, le méthacrylate de méthylnorbornyle ou le méthacrylate de diméthylnorbornyle.

4. Copolymères polymérisés en émulsion dans lesquels un ou plusieurs monomères éthyléniquement insaturés sont copolymérisés, caractérisés en ce qu'ils renferment de 0,5 à 60% en poids d'un ou de plusieurs motifs comonomères de formules générales III ou IV, 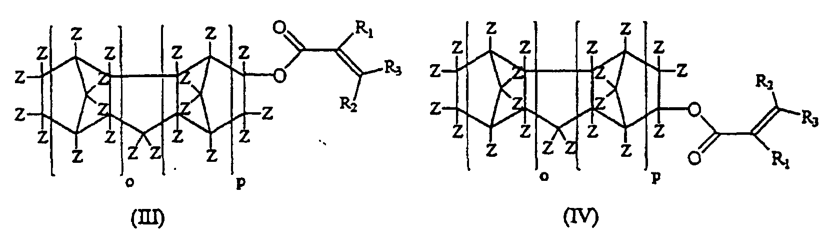 dans lesquelles R₁, R₂ et R₃ sont identiques ou différents et représentent H ou un radical alkyle en C₁ à C₄, et Z peut être identique ou différent et représente H, R, OR, COOR, COR, où R représente un radical alkyle en C₁ à C₁₀ ramifié ou non ramifié, ou un radical cycloalkyle, ou un radical aryle en C₁ à C₈, et o et p désignent, indépendamment l'un de l'autre, un entier compris entre 0 et 6, la somme de o et p étant supérieure ou égale à 1 et inférieure à 6.

5. Copolymères selon la revendication 4, caractérisés en ce que R₁ représente H ou un radical alkyle en C₁ à C₄ et R₂ et R₃ représentent H, Z peut être identique ou différent et représente H ou un méthyle, et o et p désignent, indépendamment l'un de l'autre, un entier compris entre 0 et 6, la somme de o et p étant supérieure ou égale à 1 et inférieure à 6.

6. Copolymères selon les revendications 4 à 5, caractérisés en ce que les formules générales (III) et (IV) représentent
l'acrylate de tricyclo[5.2.1.0^{2.6}]décyle,
le méthacrylate de tricyclo[5.2.1.0^{2.6}]décyle,
l'acrylate de diméthyltricyclo [5.2.1.0^{2.6}] décyle,
le méthacrylate de diméthyltricyclo[4.3.1.0^{2.5}]décyle,
l'acrylate de pentacyclo [6.5.1.1.^{3.6}0.^{2.7}0^{9.13}]pentadécyle,
le méthacrylate de pentacyclo [6.5.1.1.^{3.6}0.^{2.7}0^{9.13}] pentadécyle,
l'acrylate de triméthylpentacyclo[6.5.1.1.^{3.6}0.^{2.7}0^{9.13}] pentadécyle,
le méthacrylate de triméthylpentacyclo [6.5.1.1.^{3.6}0.^{2.7}0.^{9.13}]pentadécyle,
l'acrylate de heptacyclo[8.7.1^{2.9}.1^{4.7}.1^{11.17}.0.0^{3.8}.0^{12.16}] eicosyle,
le méthacrylate de heptacyclo [8.7.1^{2.9}.1^{4.7}.1^{11.17}.0.0^{3.8}.0^{12.16}] eicosyle,
l'acrylate de tétraméthylheptacyclo
[8.7.1^{2.9}.1^{4.7}.1^{11.17}.0.0^{3.8}.0^{12.16}]eicosyle ou
le méthacrylate de tétraméthylheptacyclo
[8.7.1^{2.9}.1^{4.7}.1^{11.17}.0.0^{3.8}.0^{12.16}]eicosyle.

7. Utilisation de copolymères selon les revendications 1 à 6 en tant que liants dans des adhésifs de construction, des crépis, des mastics, des mastics pour planchers et des mortiers de joints.

8. Utilisation de copolymères selon les revendications 1 à 6 dans des peintures et des revêtements.

9. Utilisation de copolymères selon les revendications 1 à 6 en tant que liants uniques dans des compositions de revêtements et des adhésifs.

10. Utilisation de copolymères selon les revendications 1 à 6 en tant que liants pour textiles.
